# EUROPÄISCHE PATENTSCHRIFT

(11) **EP 0 801 740 B1**
(45) Veröffentlichungstag und Bekanntmachung des Hinweises auf die Patenterteilung: **05.12.2001**
(21) Anmeldenummer: 96934425.8
(22) Anmeldetag: 17.09.1996
(51) Int. Cl.: G01N 27/407

(54) **ELEKTROCHEMISCHER MESSFÜHLER UND VERFAHREN ZUR HERSTELLUNG EINES ELEKTROCHEMISCHEN MESSFÜHLERS**
ELECTROCHEMICAL MEASURING PROBE AND PROCESS FOR ITS PRODUCTION
CAPTEUR DE MESURE ELECTROCHIMIQUE ET SON PROCEDE DE FABRICATION

(30) Priorität: 08.11.1995 DE 19541619
(43) Veröffentlichungstag der Anmeldung: 22.10.1997
(73) Patentinhaber: ROBERT BOSCH GMBH, 70442 Stuttgart (DE)
(72) Erfinder: FRIESE, Karl-Hermann, D-71229 Leonberg (DE); GRÜNWALD, Werner, D-70839 Gerlingen (DE); SCHMID, Kurt, D-71254 Ditzingen (DE); DE LA PRIETA, Claudio, D-70569 Stuttgart (DE); SCHNEIDER, Gerhard, D-71665 Vaihingen (DE); RENZ, Hans-Jörg, D-70771 Leinfelden-Echterdingen (DE); NEUMANN, Harald, D-71665 Vaihingen (DE); GLANZ, Uwe, D-71679 Asperg (DE); KUSCHEL, Stefan, D-70499 Stuttgart (DE); HAUG, Ralf, D-71229 Leonberg (DE); MOSER, Manfred, D-72768 Reutlingen-Sickenhausen (DE); BAYHA, Kurt, D-71739 Oberriexingen (DE); SEIBOLD, Annette, D-71277 Rutesheim (DE); SCHMIEDEL, Carmen, D-71726 Benningen (DE); SCHUETZ, Reiner, D-71254 Ditzingen (DE)
(86) Internationale Anmeldenummer: DE9601753
(87) Internationale Veröffentlichungsnummer: WO9717608

(56) Entgegenhaltungen:
- DE-A- 2 755 650
- DE-A- 2 928 496
- DE-A- 3 804 683
- US-A- 5 215 643
- PATENT ABSTRACTS OF JAPAN vol. 013, no. 459 (E-832), 17.Oktober 1989 & JP,A,01 176664 (HITACHI LTD), 13.Juli 1989,

## Beschreibung

Die Erfindung betrifft einen elektrochemischen Meßfühler nach dem Oberbegriff des Anspruchs 1 und ein Verfahren zur Herstellung eines elektrochemischen Meßfühlers nach dem Oberbegriff des Anspruchs 8.

### Stand der Technik

Elektrochemische Meßfühler der gattungsgemäßen Art sind bekannt. Diese besitzen in der Regel einen schichtförmigen Aufbau, wobei ein gleichzeitig als Träger fungierender Festelektrolyt an gegenüberliegenden Seiten jeweils eine Elektrode aufweist. Eine der Elektroden ist einem Meßgas und die andere Elektrode einem Referenzgas, in der Regel der Luftatmosphäre, ausgesetzt. Entsprechend einem Sauerstoffanteil in dem Meßgas stellt sich an der dem Meßgas zugewandten Elektrode ein bestimmter Sauerstoffpartialdruck ein. Dieser steht in einem bestimmten Verhältnis zu dem von dem Referenzgas ausgehenden, an der diesem zugewandten Elektrode sich einstellenden Sauerstoffpartialdruck. Aufgrund des sich ergebenden Sauerstoffkonzentrationsunterschiedes an den Elektroden stellt sich zwischen diesen eine bestimmte Detektorspannung ein, die mittels einer geeigneten Auswerteschaltung ausgewertet werden kann und somit ein an der dem Meßgas ausgesetzten Elektrode anliegenden Sauerstoffkonzentration entsprechendes Signal bereitstellt. Ein derartiger chemischer Meßfühler ist beispielsweise aus der DE-OS 29 28 496 bekannt. Hierbei wird die dem Referenzgas ausgesetzte Elektrode mit einer Abdeckung versehen. Die der Elektrode zugewandte Seite der Abdeckung weist grabenförmige Strukturen auf, die ein Zuführen des Referenzgases zu der Elektrode gestatten. Der chemische Meßfühler weist somit einen Aufbau auf, der aus relativ vielen einzelnen Schichten besteht, die mittels eines allgemein bekannten Sinterverfahrens fest miteinander verbunden werden. Bei dem bekannten Aufbau des elektrochemischen Meßfühlers ist nachteilig, daß die wirksame Elektrodenfläche, die mit dem Referenzgas unmittelbar in Kontakt steht, im Verhältnis zur tatsächlichen Elektrodenfläche relativ klein ist.

Aus der DE 38 04 683 A1 ist ein chemischer Meßfühler bekannt, bei dem eine Elektrodenschicht auf die gewellte Oberfläche eines Festelektrolytkörpers aufgebracht ist. Die Elektrodenschicht paßt sich an die gewellte Oberfläche des Festelektrolytkörpers an, so daß die Oberfläche der Elektrode ebenfalls eine gewellte Form erhält.

### Vorteile der Erfindung

Der erfindungsgemäße elektrochemische Meßfühler mit den im Anspruch 1 genannten Merkmalen bietet den Vorteil, daß eine relativ große effektive Elektrodenfläche zur Verfügung steht. Dadurch, daß wenigstens eine der Elektroden an ihrer dem Meßgas beziehungsweise dem Referenzgas ausgesetzten Seite eine in die Elektrode eingeprägte Profilierung aufweist, ist es in einfacher Weise möglich, bei in ihrer äußeren Größe unverändert gebliebenen elektrochemischen Meßfühlern die Elektrodenfläche zu vergrößern. Durch die Profilierung, die vorzugsweise von grabenförmigen Strukturen gebildet wird, kann die Elektrodenoberfläche der Elektrode vergrößert werden, so daß eine entsprechend höhere Elektrodenaktivität, beispielsweise eine höhere Pumpleistung, der Elektrode zur Verfügung steht.

In bevorzugter Ausgestaltung der Erfindung ist vorgesehen, daß die Profilierung von eine Netzstruktur ergebenden grabenförmigen Strukturen gebildet wird, die als Referenzgaskanäle verwendet werden. Hierdurch wird sehr vorteilhaft erreicht, daß durch die Profilierung der dem Referenzgas ausgesetzten Elektrode selbst, die Anordnung einer zusätzlichen, die Referenzluftkanäle aufweisenden Schicht des elektrochemischen Meßfühlers nicht mehr notwendig ist. Der Aufbau des elektrochemischen Meßfühlers kann hierdurch vereinfacht werden. Darüber hinaus ist durch den Wegfall einer zusätzlichen Schicht eine Miniaturisierung des elektrochemischen Meßfühlers möglich.

Darüber hinaus bietet das erfindungsgemäße Verfahren zur Herstellung eines elektrochemischen Meßfühlers mit den im Anspruch 8 genannten Merkmalen den Vorteil, daß in einfacher, für eine massenhafte Herstellung geeigneter Weise elektrochemische Meßfühler erzielbar sind, die sich durch einen einfachen und robusten Aufbau auszeichnen. Dadurch, daß wenigstens eine der Elektroden an ihrer dem Meßgas beziehungsweise Referenzgas ausgesetzten Seite vor dem Sintern profiliert wird, ist es vorteilhaft möglich, die Profilierung einerseits für eine Vergrößerung der effektiven Elektrodenoberfläche auszunutzen und andererseits durch die Profilierung eine größere mechanische Stabilität der Elektrode beziehungsweise der die Elektrode aufweisenden Meßfühler zu erreichen, so daß deren Handhabbarkeit sowohl beim Herstellungsprozeß als auch beim Einbau in ein Sensorelement verbessert ist.

Das Einbringen der Prägung in die Elektrode vor der Sinterung des elektrochemischen Meßfühlers ist in einfacher Weise mittels eines entsprechenden Prägestempels zu einem Zeitpunkt möglich, in dem die Elektrode beziehungsweise der Meßfühler noch nicht gesintert sind, sondern diese als sogenannte grüne Folien vorliegen. Diese weisen somit eine gute Verformbarkeit auf, so daß mittels der Prägung hochpräzise Profilierungen erzielbar sind, die nach dem Sintern des elektrochemischen Meßfühlers erhalten bleiben.

Weitere vorteilhafte Ausgestaltungen der Erfindung ergeben sich aus den übrigen in den abhängigen Ansprüchen genannten Merkmalen.

### Zeichnungen

Die Erfindung wird nachfolgend in Ausführungsbeispielen anhand der zugehörigen Zeichnungen näher erläutert. Es zeigen:
- Figur 1: eine schematische Schnittdarstellung durch einen elektrochemischen Meßfühler;
- Figur 2: eine perspektivische Draufsicht auf eine dem Referenzgas ausgesetzte Elektrode und
- Figur 3: eine Draufsicht auf eine einem Meßgas ausgesetzte Elektrode nach einem weiteren Ausführungsbeispiel.

### Beschreibung der Ausführungsbeispiele

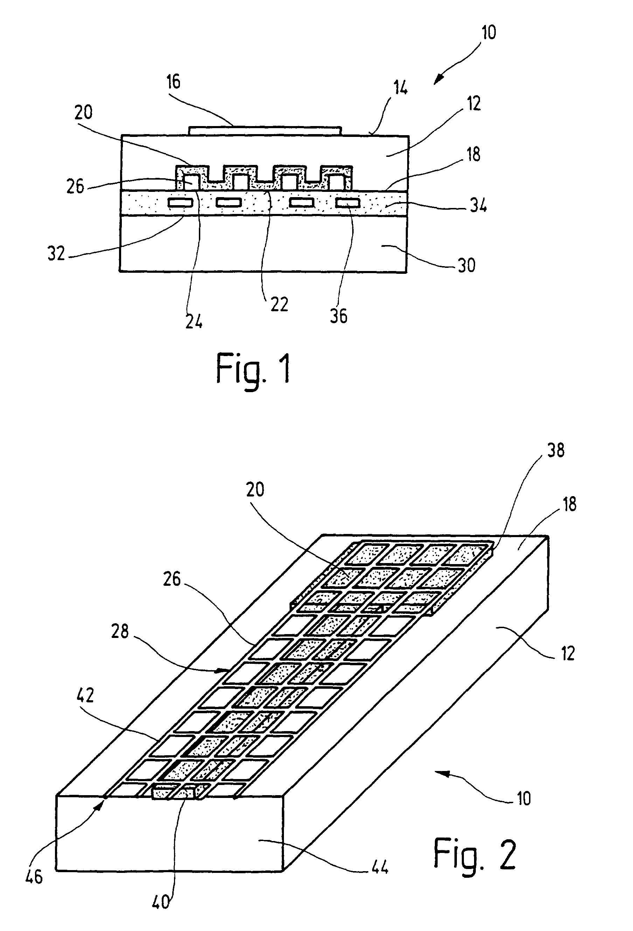

Figur 1 zeigt einen allgemein mit 10 bezeichneten elektrochemischen Meßfühler, der beispielsweise zur Bestimmung des Sauerstoffgehaltes in Gasgemischen, insbesondere in Abgasen von Verbrennungskraftmaschinen, eingesetzt werden kann. Der Meßfühler 10 besteht aus einem Festelektrolyten 12, auf dessen hier oben dargestellten Seite 14 eine erste Elektrode 16 angeordnet ist. An der anderen Seite 18 des Festelektrolyten 12 ist eine zweite Elektrode 20 angeordnet. Die Elektrode 20 ist hierbei in den Festelektrolyten 12 eingebettet, so daß eine Außenseite 22 der Elektrode 20 mit der Seite 18 des Festelektrolyten 12 fluchtet und insgesamt eine plane Oberfläche ergibt.

Die Elektrode 20 besitzt im Querschnitt gesehen einen mäanderförmigen Verlauf, dessen Aufbau noch näher erläutert wird. Die Elektrode 20 besitzt eine Profilierung 24, die von zur Außenseite 22 hin offenen grabenförmigen Strukturen 26 gebildet wird. Die grabenförmigen Strukturen 26 bilden - wie anhand Figur 2 noch deutlich wird - ein Netz 28, in dem längs der Elektrode 20 verlaufende grabenförmige Strukturen 26 sich mit quer zur Elektrode 20 angeordneten grabenförmigen Strukturen 26 kreuzen.

Die Seite 18 des Festelektrolyten 12 ist mit einer Deckplatte 30 versehen. Durch die Deckplatte 30 werden die grabenförmigen Strukturen 26 an der Außenseite 22 der Elektrode 20 verschlossen, so daß sich ein verzweigtes Kanalsystem ergibt. Die grabenförmigen Strukturen 26 werden somit an drei Seiten von der Elektrode 20 und an ihrer vierten Seite von der Deckplatte 30 begrenzt. In der Deckplatte 30 kann optional eine Heizeinrichtung 32 vorgesehen sein, bei der in einer Schicht 34 Heizleiter 36 angeordnet sind.

Die grabenförmigen Strukturen 26 sind an einer Seite des Meßfühlers 10, insbesondere an einer Stirnfläche des Meßfühlers 10, offen, so daß ein Referenzgas durch das von den grabenförmigen Strukturen 26 geschaffene netzartige Kanalsystem zu der Elektrode 20 gelangen kann. Dadurch, daß die grabenförmigen Strukturen 26 an drei Seiten von der Elektrode 20 umgeben werden, ist eine effektive Oberfläche der Elektrode 20, die direkt mit dem Referenzgas in Kontakt kommt, relativ groß. Im gezeigten Beispiel beträgt diese relative Oberflächenelektrode 20 das Dreifache gegenüber einer üblichen, planar auf den Festelektrolyten 12 aufgebrachten Elektrode.

Anhand der Figur 2 soll das erfindungsgemäße Herstellungsverfahren für den elektrochemischen Meßfühler 10 näher erläutert werden. Gleiche Teile wie in Figur 1 sind mit gleichen Bezugszeichen versehen und nicht nochmals erläutert. Auf die Darstellung des kompletten Meßfühlers 10 wurde aus Gründen der Übersichtlichkeit verzichtet.

Anhand der perspektivischen Draufsicht wird deutlich, daß der Festelektrolyt 12 im wesentlichen plattenförmig vorliegt. Der Festelektrolyt 12 besteht beispielsweise aus yttriumstabilisiertem Zirkonoxid und liegt in Folienform vor. Auf der hier oben liegenden Seite 18 des Festelektrolyten 12 ist die Elektrode 20 aufgebracht. Das Aufbringen der Elektrode 20 erfolgt üblicherweise mittels bekannter Verfahrensschritte, wie beispielsweise Aufdrucken. Die Elektrode 20 steht hierbei über der Kontur des Festelektrolyten 12 über. Sowohl der Festelektrolyt 12 als auch die Elektrode 20 und die an der entgegengesetzten Seite angeordnete - hier nicht sichtbare - Elektrode 16 liegen noch als sogenannte Grünfolien vor, das heißt, diese sind noch nicht gesintert.

Die Elektrode 20 besitzt einen Elektrodenkopf 38, der über eine Leiterbahn 40 mit einer nicht dargestellten Schaltungsanordnung kontaktierbar ist. Nach Aufbringen der Elektrode 20 auf den Festelektrolyten 12 wird mittels eines hier angedeuteten Prägestempels 42, der eine Gitterstruktur aufweist, die der späteren Anordnung des von den grabenförmigen Strukturen 26 gebildeten Netzes 28 aufweist, geprägt. Durch Beaufschlagen des Prägestempels 42 mit einer Prägekraft wird die gitterförmige Struktur des Prägestempels 42 in der Elektrode 20 sowie teilweise in dem Festelektrolyten 12 abgebildet. Durch die Prägekraft wird gleichzeitig die Elektrode 20 in den Festelektrolyten 12 eingedrückt, so daß sich die - wie in Figur 1 in der Schnittdarstellung dargestellt - Struktur mit der im Festelektrolyten 12 eingebetteten Elektrode 20 ergibt. Nach Abheben des Prägestempels 42 verbleiben in der Elektrode 20 die sich kreuzenden grabenförmigen Strukturen 26.

Im Anschluß an den Prägevorgang wird der gesamte elektrochemische Meßfühler 10 in bekannter Weise gesintert, so daß die einzelnen Schichten fest miteinander verbunden sind. Hierbei erfolgt gleichzeitig eine Stabilisierung des Meßfühlers 10 und der in dem Meßfühler 10, insbesondere in der Elektrode 20, geprägten grabenförmigen Strukturen 26. Die grabenförmigen Strukturen 26 sind hierbei so angelegt, daß an einer Stirnseite 44 des Meßfühlers 10 diese auch nach Abdeckung mittels der in Figur 1 gezeigten Deckplatte 30 Öffnungen 46 aufweisen, so daß ein Referenzgas das von den grabenförmigen Strukturen 26 gebildete Kanalnetz durchströmen kann.

Insgesamt besitzt der elektrochemische Meßfühler 10 einen sehr kompakten Aufbau, der mittels einfacher Verfahrensschritte erzielt wird. Die einzelnen Strukturen des elektrochemischen Meßfühlers 10 sind hierbei im sogenannten Nutzen erzielbar, das heißt, gleichzeitig können eine Vielzahl von Meßfühlern 10 strukturiert werden, die nach der Strukturierung und der Sinterung entsprechend vereinzelt werden. Durch das Prägen der Elektrode 20 wird erreicht, daß eine Zuführung des Referenzgases zu der Elektrode 20, insbesondere zu deren Elektrodenkopf 38, problemlos möglich wird, ohne daß zusätzliche aufwendige Strukturen vorzusehen sind. Durch die Ausbildung des Referenzluftkanalnetzes durch die Elektrode 20 selbst kann eine optional vorhandene Schicht 34 mit seiner Heizeinrichtung 32 näher an das von dem Festelektrolyten 12 mit den Elektroden 16 und 20 gebildete Sensorteil positioniert werden, so daß sich eine bessere thermische Ankopplung der Heizeinrichtung 32 ergibt. Hierdurch wird eine geringere Belastung der Heizeinrichtung 32 möglich, da zum Erhitzen des Sensorteiles keine Zwischenschichten mehr miterhitzt werden müssen.

Weiterhin ergibt sich, daß durch die Ausbildung des Referenzgaskanalnetzes durch die Elektrode 20 selbst die effektive Elektrodenoberfläche der Elektrode 20 gegenüber dem Referenzgas vergrößert ist, so daß eine Pumpleistung der Elektrode 20 verbessert ist.

Letztendlich wird durch die Profilierung der Elektrode 20 die gesamte Stabilität des elektrochemischen Meßfühlers 10 verbessert. Die durch das Einprägen der grabenförmigen Strukturen 26 sich ergebende mäanderförmige Strukturierung der Elektrode 20 bildet gleichzeitig Versteifungsrippen beziehungsweise Versteifungsbereiche aus, die zur Erhöhung der Festigkeit des gesamten elektrochemischen Meßfühlers 10 beitragen. Insbesondere ist es möglich, die Elektrode 20, insbesondere den Elektrodenkopf 38, im Verhältnis zur Festelektrolytfläche zu vergrößern, so daß die um die Elektrode 20 verbleibenden Randbereiche des Festelektrolyten 12 verkleinert werden können. Hierdurch ist neben der Einsparung der bereits erwähnten Zwischenschicht zur Ausbildung der Luftreferenzkanäle eine weitere Miniaturisierung des gesamten elektrochemischen Meßfühlers 10 möglich. Der elektrochemische Meßfühler 10 kann insgesamt somit aus beispielsweise nur noch zwei Folien aufgebaut sein, wobei eine erste Folie von dem Festelektrolyten 12 mit den Elektroden 16 und 20 und eine zweite Folie von der Deckelplatte 30 mit der die Heizleiter 36 aufweisenden Schicht 34 gebildet wird.

Im gezeigten Beispiel sind die grabenförmigen Strukturen 26 im Querschnitt gesehen im wesentlichen quadratisch geprägt. Selbstverständlich ist jede andere Querschnittsform, beispielsweise trapezförmig, dreieckförmig, halbrund usw., geeignet.

Nach einem weiteren Ausführungsbeispiel kann zur Vergrößerung der effektiven Elektrodenoberfläche selbstverständlich auch die Elektrode 16 in vollkommen analoger Weise geprägt werden. Hierdurch vergrößert sich die mit dem Meßgas in Verbindung stehende Oberfläche der Elektrode 16. Dadurch, daß während des Prägevorgangs sowohl der Festelektrolyt 12 als auch die Elektroden 16 und 20 noch in ihrer pasteusen Form, also im grünen Zustand, vorliegen, ist eine Profilierung beziehungsweise Strukturierung in jeder erdenklichen Weise möglich. So können beispielsweise durch eine entsprechende Profilierung die Elektroden 16 beziehungsweise 20 in unterschiedliche horizontale Ebenen des elektrochemischen Meßfühlers 10 "verlegt" werden, so daß beim elektrischen Kontaktieren der Elektroden 16 beziehungsweise 20 Leitungskreuzungen in einfacher Weise realisiert werden können. Darüber hinaus kann eine Durchkontaktierung vereinfacht werden, da in den geprägten Bereichen der Elektroden 16 beziehungsweise 20 die Dicke des Festelektrolyten 12 zwischen den entsprechenden Elektrodenbereichen reduziert wird.

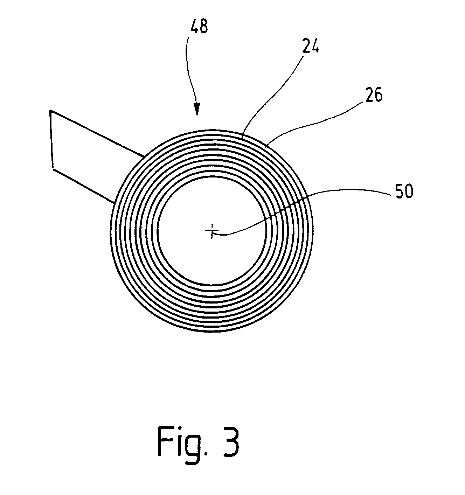

In der Figur 3 ist in einer Draufsicht eine Elektrode 48 eines elektrochemischen Meßfühlers gezeigt. Die hier gezeigte Elektrode 48 findet bei elektrochemischen Meßfühlern Verwendung, die einen gegenüber dem in Figur 1 und 2 gezeigten Meßfühler 10 abweichenden Aufbau besitzen. Die Elektroden sind im wesentlichen kreiszylinderförmig ausgebildet und besitzen an ihrer Oberfläche koaxial zu einem Mittelpunkt 50 umlaufende Profilierungen 24, die von in die Elektrode 48 geprägten grabenförmigen Strukturen 26 gebildet werden. Wird die in der Figur 3 dargestellte Elektrode 48 mit der hier dargestellten Fläche einem Meßgas oder einem Referenzgas ausgesetzt, ist die effektive Elektrodenoberfläche, die mit dem Meßgas beziehungsweise dem Referenzgas in Berührung gelangt, gegenüber einer Elektrode mit einer vollkommen planen Oberfläche sehr viel größer. Hierdurch ergeben sich die bereits erwähnten Vorteile. Gegenüber den bekannten Elektroden besitzen die erfindungsgemäßen Elektroden 16, 20 beziehungsweise 48 bei einem unveränderten Platzbedarf und ohne die Verwendung von zusätzlichem Material eine sehr viel höhere effektive Elektrodenoberfläche und somit eine höhere Elektrodenaktivität.

## Patentansprüche

1. Elektrochemischer Meßfühler (10) mit einem Festelektrolyten (12) einer einem Meßgas ausgesetzten ersten Elektrode und einer einem Referenzgas ausgesetzten zweiten Elektrode, wobei die Elektroden vorzugsweise an gegenüberliegenden Seiten des Festelektrolyten angeordnet sind, **dadurch gekennzeichnet, daß** wenigstens eine der Elektroden (16, 20) an ihrer dem Meßgas bzw. dem Referenzgas ausgesetzten Seite (22) eine Profilierung (24) aufweist, die in die Elektroden (16, 20) eingeprägt ist.

2. Elektrochemischer Meßfühler nach Anspruch 1, **dadurch gekennzeichnet, daß** die Profilierung (24) eine grabenförmige Vertiefung (26) an der Elektrode (16, 20) ausbildet.

3. Elektrochemischer Meßfühler nach Anspruch 2, **dadurch gekennzeichnet, daß** die grabenförmige Vertiefung (26) wenigstens einseitig Öffnungen (46) aufweist, die mit dem Referenzgas in Verbindung stehen.

4. Elektrochemischer Meßfühler nach Anspruch 2, **dadurch gekennzeichnet, daß** die grabenförmigen Vertiefungen (26) eine Netzstruktur (28) ergeben.

5. Elektrochemischer Meßfühler nach Anspruch 2, **dadurch gekennzeichnet, daß** die die Vertiefung (26) aufweisende Elektrode (16, 20) in den Festelektrolyten (12) eingebettet ist, so daß der Festelektrolyt (12) und die Elektrode (16, 20) eine plane Oberfläche besitzen.

6. Elektrochemischer Meßfühler nach Anspruch 2, **dadurch gekennzeichnet, daß** die grabenförmige Vertiefungen (26) mit einer Deckelplatte abgedeckelt werden, so daß sich ein Kanalnetz ergibt, das die Öffnungen (46) aufweist.

7. Verfahren zur Herstellung eines elektrochemischen Meßfühlers mit einem Festelektrolyten, einer einem Meßgas ausgesetzten ersten Elektrode und einer einem Referenzgas ausgesetzten zweiten Elektrode, wobei die Elektroden im wesentlichen schichtförmig auf dem Festelektrolyten aufgebracht werden und der Meßfühler anschließend gesintert wird, **dadurch gekennzeichnet, daß** wenigstens eine der Elektroden (16, 20) an ihrer dem Meßgas bzw. dem Referenzgas ausgesetzten Seite vor dem Sintern durch Prägen profiliert wird.

8. Verfahren nach Anspruch 7, **dadurch gekennzeichnet, daß** in die Oberfläche der Elektroden (16, 20) grabenförmige Vertiefungen (26) geprägt werden.

9. Verfahren nach einem der vorhergehenden Ansprüche, **dadurch gekennzeichnet, daß** in die Oberfläche der Elektroden (16, 20) ein Netz (28) von sich kreuzenden grabenförmigen Vertiefungen (26) geprägt wird.

## Claims

1. Electrochemical measurement sensor (10) having a solid electrolyte (12), a first electrode which is exposed to a gas which is to be measured and a second electrode which is exposed to a reference gas, the electrodes preferably being arranged on opposite sides of the solid electrolyte, **characterized in that** at least one of the electrodes (16, 20), on its side which is exposed to the gas to be measured or to the reference gas, has a profiling (24) which is stamped into the electrodes (16, 20).

2. Electrochemical measurement sensor according to Claim 1, **characterized in that** the profiling (24) forms a trench-like recess (26) on the electrode (16, 20).

3. Electrochemical measurement sensor according to Claim 2, **characterized in that** the trench-like recess (26) has openings (46), which are in communication with the reference gas, on at least one side.

4. Electrochemical measurement sensor according to Claim 2, **characterized in that** the trench-like recesses (26) form a mesh structure (28).

5. Electrochemical measurement sensor according to Claim 2, **characterized in that** the electrode (16, 20) which has the recess (26) is embedded in the solid electrolyte (12), so that the solid electrolyte (12) and the electrode (16, 20) have a planar surface.

6. Electrochemical measurement sensor according to Claim 2, **characterized in that** the trench-like recesses (26) are covered by a cover plate, so that a network of channels, which has the openings (46), is formed.

7. Process for producing an electrochemical measurement sensor having a solid electrolyte, a first electrode which is exposed to a gas to be measured and a second electrode which is exposed to a reference gas, the electrodes being applied substantially in layer form to the solid electrolyte and the measurement sensor then being sintered, **characterized in that** at least one of the electrodes (16, 20), on its side which is exposed to the gas to be measured or to the reference gas, is profiled by stamping prior to the sintering operation.

8. Process according to Claim 7, **characterized in that** trench-like recesses (26) are stamped into the surface of the electrodes (16, 20).

9. Process according to one of the preceding claims, **characterized in that** a network (28) of trench-like recesses (26) which intersect one another is stamped into the surface of the electrodes (16, 20).

## Revendications

1. Capteur de mesure électrochimique (10) comprenant un électrolyte solide (12), une première électrode exposée à un gaz de mesure et une seconde électrode exposée à un gaz de référence, les électrodes étant prévues de préférence sur les faces opposées de l'électrolyte solide,
**caractérisé en ce qu'**
au moins l'une des électrodes (16, 20) comporte un profilage (24) imprimé dans les électrodes (16, 20), sur son côté (22) exposé au gaz de mesure ou au gaz de référence.

2. Capteur de mesure électrochimique selon la revendication 1,
**caractérisé en ce que**
le profilage (24) constitue une cavité (26) en forme de sillon dans l'électrode (16, 20).

3. Capteur de mesure électrochimique selon la revendication 2,
**caractérisé en ce que**
la cavité en forme de sillon (26) présente au moins une ouverture (46) d'un côté qui communique avec le gaz de référence.

4. Capteur de mesure électrochimique selon la revendication 2,
**caractérisé en ce que**
les cavités (26) en forme de sillons donnent une structure en réseaux (28).

5. Capteur de mesure électrochimique selon la revendication 2,
**caractérisé en ce que**
les électrodes (16, 20) présentant la cavité (26) sont intégrées dans l'électrolyte solide (12) pour que l'électrolyte solide (12) et l'électrode (16, 20) possèdent une surface supérieure plane.

6. Capteur de mesure électrochimique selon la revendication 2,
**caractérisé en ce que**
les cavités (26) en forme de sillons sont recouvertes d'une plaque de recouvrement pour former un réseau de canaux ayant les ouvertures (46).

7. Procédé de fabrication d'un capteur de mesure électrochimique comprenant un électrolyte solide, une première électrode exposée à un gaz de mesure et une seconde électrode exposée à un gaz de référence, les électrodes étant appliquées essentiellement sous la forme de couches sur l'électrolyte solide, et le capteur de mesure étant ensuite fritté,
**caractérisé en ce qu'**
au moins l'une des électrodes (16, 20) est matricée avant le frittage dans sa face exposée au gaz de mesure ou au gaz de référence.

8. Procédé selon la revendication 7,
**caractérisé en ce que**
des cavités en forme de sillons (26) sont matricées dans la surface des électrodes (16, 20).

9. Procédé selon l'une des revendications 7 et 8,
**caractérisé en ce qu'**
un réseau (28) de cavités (26) en sillons qui se croisent est matricé dans la surface des électrodes (16, 20).
